# EUROPÄISCHE PATENTSCHRIFT

(11) **EP 0 299 307 B1**
(45) Veröffentlichungstag und Bekanntmachung des Hinweises auf die Patenterteilung: **20.07.1994**
(21) Anmeldenummer: 88110599.3
(22) Anmeldetag: 02.07.1988
(51) Int. Cl.: B01D 19/04

(54) **Schaumhemmender Zusatz für saure Flüssigkeiten**
Foam retarding addition for acid liquids
Addition de retardant de mousse pour liquides acides

(30) Priorität: 14.07.1987 DE 3723198
(43) Veröffentlichungstag der Anmeldung: 18.01.1989
(73) Patentinhaber: BAYER AG, 51368 Leverkusen (DE)
(72) Erfinder: Melzer, Detlef, Dr., D-5000 Köln 80 (DE); Tabel, Erhardt, D-5090 Leverkusen 1 (DE); Biermann, Hans-Peter, Dr., D-4150 Krefeld 1 (DE)

(56) Entgegenhaltungen:
- DE-A- 1 493 944
- DE-A- 1 936 843
- DE-A- 2 508 708
- DE-A- 2 713 498
- DE-B- 2 233 941
- US-A- 3 188 340
- US-A- 3 310 480
- US-A- 3 911 056

## Beschreibung

Die vorliegende Erfindung betrifft Mittel zur Schaumunterdrückung in Bädern, Beizen und Elektrolytlösungen, die unter anderem Tenside zur Verringerung der Oberflächenspannung enthalten.

Saure Beizen und galvanische Elektrolytlösungen sowie vergleichbare saure Bäder zur Metalloberflächenbehandlung werden aufgrund der prozeßbedingten Gasentwicklung, insbesondere von Wasserstoff, und in geringem Maße auch durch die anodische Sauerstoffentwicklung sowie der derzufolge auftretenden Sprühnebel saurer, korrodierender und zum Teil toxischer Aerosole mit oberflächenaktiven, chemisch resistenten Verbindungen versetzt.

Zur drastischen Erniedrigung der Oberflächenspannung finden z.B. perfluoralkylierte Sulfonate mit Kationen des Typs Tetraalkylammonium Anwendung.

Die erwünschte hohe Grenzflächenaktivität des Tensidzusatzes führt jedoch häufig zu einer gleichzeitig auftretenden und störenden Schaumbildung, die unter bestimmten betriebstechnischen Gegebenheiten und Bearbeitungsprozessen im Extremfall den normalen Prozessablauf verhindert und damit die Anwendung von Tensiden in Frage stellt.

Dies ist insbesondere der Fall in geometrisch ungünstig gestalteten Beiz- oder Galvanikbädern größerer Tiefe bei vergleichbar geringer Badoberfläche oder bei der Verwendung hoher Stromdichten mit entsprechend intensiver Wasserstoffentwicklung.

Die Schaumbildung und -stärke ist zudem abhängig von der Oberflächenspannung, d.h. der Menge an Tensid, der Temperatur und der mechanischen Bewegung der Lösung bzw. einer mechanischen Zerstörung des Schaumes sowie der Auslastung des Bades mit gleichzeitig zu behandelnden Werkstücken.

Es ist bereits bekannt geworden, daß zur Beseitiung dieser störenden Schaumbildung schaumhemmende Mittel, - auch bezeichnet als Entschäumer, Schaumverhütungs-oder Antischaummittel -, wie Fette, Öle, langkettige Alkohole oder Glykole, Alkylphosphate, Metallseifen, spezielle Silikonentschäumer, handelsübliche perfluoralkylmodifizierte Kohlenwasserstoff-Entschäumer und perfluoralkyl-substituierte Silikone den Beizen und Bädern zugesetzt werden (Kirk-Othmer (3.), Bd. 7: 430-48; Glodmann, Chem. Industrie 20 (1968), 335-7).

In der DE-A-2 233 941 sind vollfluorierte Alkylphosphonate als Entschäumer für Alkylsulfonate in der Textilveredelung beschrieben. Diese Verbindungen sind in aggressiven Medien wie z.B. stark sauren und oxidativ wirkenden Galvanikbädern nicht wirksam und zersetzen sich.

Die Anwendung marktüblicher Zusätze zur Schaumdämpfung tensidischer Lösungen ist in sauren Beizen und galvanischen Bädern gemäß den hier herrschenden physikalischen und chemischen Bedingungen der Temperatur, des Stromflusses, des niedrigen pH-Wertes und der starken Oxidationswirkung nicht möglich.

Die handelsüblichen Mittel halten den Einsatzbedingungen von z.B. pH-Werten <1, erhöhter Temperatur, gegebenenfalls Stromdichten von ca. 80 A/dm² und CrO₃-Konzentration von z.B. 250 g/l nicht stand und weisen infolgedessen keine geeignete entschäumende Wirkung auf. Die entstehenden Abbaustoffe dieser Mittel bringen die Gefahr einer Verunreinigung des Bades mit sich. Bei der Metallabscheidung oder der Beizung können so Störungen in den nachfolgenden Prozeßschritten auftreten.

Aus der DE-A-2 713 498 sind spezielle perfluoralkylsubstituierte Phosphorsäureester [R_{F}SO₂N(R)-R'-O-P(O)(OM)₂] und ein Verfahren zu ihrer Herstellung bekannt. Diese Verbindungen können als grenzflächenaktive Mittel verwendet werden.

Aufgabe war es nun, ein schaumhemmendes Mittel zur Verfügung zu stellen, welches eine extrem niedrige wirksame Anwendungskonzentration ohne Beeinflussung der allgemeinen Badeigenschaften und ohne Veränderung der Beizwirkung oder einwandfreien Metallabscheidung auf Werkstücken in der Galvanik aufweist.

Die Wirkung des schaumhemmenden Mittels muß im Regelfall schnell erfolgen und sie muß von möglichst großer Dauer sein.

Der Zusatz des schaumhemmenden Mittels in das saure Bad ist im Hinblick auf eine verbreitete und effektive betriebliche Handhabung möglichst einfach zu gestalten. Dies kann z.B. durch entsprechende Formulierung des Wirkstoffes in wäßriger oder organischer Lösung bzw. Suspension in Wasser oder organischen Flüssigkeiten mit oder ohne Zumischung des Co-Tensids erfolgen. Vorzugsweise wird hierbei Wasser als Lösungs- oder Suspensionsmittel verwendet. Dennoch sind auch Formulierungen mit organischen Trägersubstanzen möglich, da infolge der extrem geringen Dosierungen des Zusatzes im Bad keine Verschlechertung der Werkstückbearbeitung verzeichnet werden sollte.

Neben der verlangten Oberflächenaktivität muß eine Löslichkeit oder Dispergierbarkeit des Mittels gewährleistet sein und das in Frage kommende Mittel muß chemisch äußerst resistent gegen saure und oxidierende Medien auch bei erhöhten Temperaturen sein. Es sollte verträglich mit den in den Beizen oder galvanischen Bädern enthaltenen Salzen sein, und die Wirksamkeit des Zusatzes muß schon ab kleinster Einsatzkonzentration möglichst ohne Störung des sonstigen betrieblichen Prozeßablaufes gewährleistet und gänzlich ohne nachteilige Effekte auf den Beiz- oder Metallisierungsprozeß sein. Außerdem sollten mögliche Ausschleppverluste des Zusatzes in einfacher Weise kontrollierbar sein und durch entsprechende Nachdosierung ausgeglichen werden können. Da der Zusatz eines die Oberflächenspannung senkenden Tensids als Co-Tensid zum Einsatz gelangt, darf natürlich dessen Wirkung ebenfalls nicht beeinträchtigt werden.

Gegenstand der vorliegenden Erfindung sind Mittel zur Schaumunterdrückung für saure Elektrolytlösungen zur Herstellung galvanischer Metallschichten mit perfluoralkylierten Tensiden zur Verringerung der Oberflächenspannung, die neben üblichen Tensiden zusätzlich perfluoralkylhaltige Di- und/oder Triester der Phosphorsäure der folgenden allgemeinen Formel enthalten: 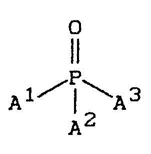
- A¹, A², A³: gleich oder verschieden sein können und einen Rest mit folgender Formel darstellen:

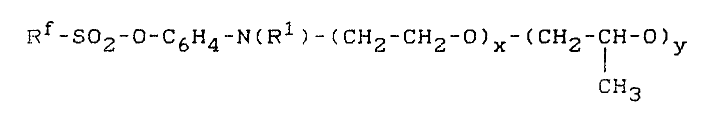

R^{f}-SO₂-N(R¹)-(CH₂)₃O 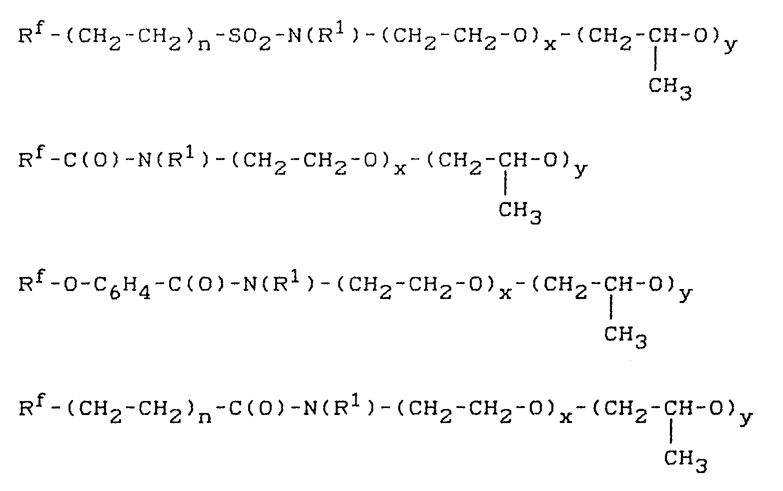
oder dem Hydroxylrest entsprechen, wobei jedoch höchstens ein Rest für den Hydroxylrest stehen kann und
- R^{f}: linearer oder verzweigter aliphatischer Perfluoralkylrest mit 4 bis 12 Kohlenstoffatomen ist,
- x: ganzzahliger Wert von 1 bis 10,
- y: ganzzahliger Werg von 0 bis 10,
- R¹: Wasserstoff-, Alkyl- oder Arylrest mit 1 bis 6 Kohlenstoffatomen,
- n: ein ganzzahliger Wert von 1 bis 10 ist oder
- A¹, A²: gleich oder verschieden, einen Rest mit folgender Formel darstellen: 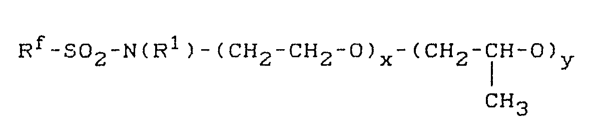
und A³ einen Hydroxylrest darstellt und
R^{f}, R¹, x, y dieselbe Bedeutung wie oben haben.

Die perfluorgruppenhaltigen Phosphorsäurereste liegen in Konzentrationen zwischen 0,01 und 10 mg/l, vorzugsweise zwischen 0,1 und 1 mg/l in den tensidhaltigen sauren Flüssigkeiten vor. Diese schaumhemmenden Mittel werden in wäßriger oder organischer Lösung oder Suspension zusammen mit oberflächenaktiven Fluortensiden der sauren Flüssigkeit zugesetzt.

Anwendung finden diese Mittel in sauren Flüssigkeiten, insbesondere in Elektrolytlösungen zur Herstellung galvanischer Metallschichten mit perfluoralkylierten Tensiden zur Verringerung der Oberflächenspannung, speziell in sechswertige Chromverbindungen und Fluortenside enthaltenden Elektrolytlösungen zur Herstellung von Chromschichten (z.B.: Hart- oder Glanzchromschichten).

Von Vorteil ist, daß die erfindungsgemäße Anwendung einer Verbindung der o.g. Formel als schaumhemmendes Mittel gewährleistet, daß der Zusatz eine hohe Beständigkeit gegen die vorherrschend chemisch-aggressiven Bäder des Einsatzbereiches besitzt, insbesondere gegenüber Hitze, starken Säuren und Oxidationseinflüssen. Die Verträglichkeit mit Salzen und ionischen oder nichtionischen Verbindungen wie z.B. Alkyl- oder Perfluoralkyl-Sulfonaten auch in pH-Bereichen unter 1 ist maßgeblich verantwortlich für die breite Anwendung der Verbindung der o.g. Formel. Die Verhinderung der Schaumbildung bzw. die Zerstörung bestehenden Schaumes mit diesen schaumhemmenden Zusätzen findet für viele technische Prozesse allgemeine Anwendung, so z.B. in der Metallindustrie, Galvanik, Ätz- und Beizverfahren, Leder- und Papierindustrie, in Flotten und Lösungen der Textilveredelung oder in Flotationsprozessen. Die allgemein entschäumende Wirkung des hier beschriebenen Zusatzes ist jedoch nicht auf den Einsatz in den erwähnten extremen Einsatzgebieten beschränkt, sonderen kann überall Abwendung bei der Entschäumung von Bädern und Beizen mit anionenaktiven Tensiden oder Fluortensiden finden.

Von besonderer Bedeutung ist die vorliegende Erfindung für den Einsatz oberflächenaktiver perfluoralkylierter Tenside in Bereichen, wo dies infolge der Nebenwirkungen der Tenside, insbesondere infolge der Schaumbildung bisher nicht möglich war. Als Beispiel ist hier die galvanische Werkstückbehandlung in geometrisch ungünstigen Bädern, speziell Tiefbädern zu nennen.

Die betriebliche Handhabung des erfindungsgemäßen Zusatzes zur Entschäumung gestaltet sich einfach, da die Ausschleppverluste, die im wesentlichen durch das Ausbringen von fertig behandelten Werkstücken verursacht werden, für beide Zusätze, Fluortensid und Entschäumer, praktisch gleich sind und eine regelmäßige Nachdosierung gleichmäßig erfolgen kann.

Unerwartet ist eine Initiierungsphase der Wirkung des zugesetzten Entschäumer-Tensids. Abhängig von der geometrischen Gestalt des Bades und der chemischen Zusammensetzung des Elektrolyten bzw. der Beizlösung bleibt die Schaumschicht, hervorgerufen durch den Zusatz oberflächenaktiven Fluortensids zur Unterdrückung von Sprühnebeln, zu Anfang über mehrere Stunden unverändert. Nach Ablauf dieses Zeitraums zerfällt der Schaum innerhalb von Minuten, ohne sich im Nachherein wieder zu bilden.

Die Darstellungen der zur erfindungsgemäßen Anwendung gelangten Verbindungen gemäß den o.g. Formeln sind in der Literatur bekannt. Bei der Herstellung z.B. der Bis(perfluoralkylsulfonamido-alkoxy)-phosphorsäure geht eine technisch vorteilhafte Synthese vom entsprechenden perfluoralkylierten Sulfonamido-alkohol aus, der durch Umsetzung mit einer stöchiometrischen Menge an Phosphoroxychloriden in der Hitze unter Abspaltung von Chlorwasserstoff und anschließender Verseifung in das gewünschte Produkt überführt wird. (Vgl. DE-A-1 493 944).

Die folgenden beispielhaften Ausführungen stellen keine Einschränkung dar.

Beispiele für die erfindungsgemäß einsetzbaren Verbindungen sind:
1) Bis (N-Methyl-perfluorbutylsulfonamido-ethoxy)-phosphorsäure
2) Bis(N-Methyl-perfluoroctylsulfonamido-ethoxy)-phosphorsäure
3) (N-Methyl-perfluorbutylsulfonamido-ethoxy)-(N-Methyl-perfluoroctylsulfonamido-ethoxy)-phosphorsäure.

Bevorzugt werden die Derivate mit kurzen C-Ketten zwischen dem perfluoralkylierten Sulfonamid und der Phosphorsäure-Gruppierung, z.B.

(R^{f}-SO₂-N(R¹)-CH₂-CH₂-O-)₂P(O)-OH

mit R¹ = Methyl und 4 Kohlenstoffatomen im Perfluorkohlenwasserstoffrest.

Unter den betrieblichen Einsatzbedingungen ist der Zusatz von vorzugsweise 0,1 - 1 mg/l des erfindungsgemäß als Entschäumer wirkenden Tensids, - entsprechend etwa 1/1000 der zur Verringerung der Oberflächenspannung und zur Unterdrückung von Sprühnebeln in der Galvanik oder Beizprozessen notwendigen Tensidkonzentration -, zu empfehlen.

Die molare Einsatzkonzentration ist extrem niedrig und führte in keinem der betrachteten Einsatzgebiete zu einer unerwünschten Beeinträchtigung des Prozeßes.

Eine exakte Einstellung der Einsatzkonzentration des Tensids zur Entschäumung innerhalb der angegebenen Einsatzkonzentration obliegt in der Regel einer Abstimmung auf die betrieblichen Verhältnisse, da die Parameter wie z.B. die Bad- und Werkstück-Geometrie, Austragsraten und Belegungsdichte des Bades mit den zu behandelnden Werkstücken die Anwendungskonzentration charakterisieren und im Einzelfall nicht allgemeingültig anzugeben sind.

Die erfindungsgemäßen schaumhemmenden Mittel und ihr Einsatz sollen an einem Beispiel näher erläutert werden, ohne daß hierin eine Beschränkung zu sehen ist.

### Beispiel

Bereits 100 - 125 mg Tetraethylammoniumperfluoroctylsulfonat pro Liter Elektrolyt genügen in einem üblichen Einsatzbereich, um die Oberflächenspannung so weit abzusenken, d.h. unterhalb von 30 mN/m, daß keine Sprühnebel z.B. saurer Aerosole entstehen. Diese Fluortensidkonzentration ist unbedingt notwendig, um eine optimale Wirkung bei möglichst geringem Tensidverbrauch zu erreichen (H.G. Klein, J.N. Meußdörffer, H. Niederprüm: Metalloberfläche 29 (1975), Heft 11, 559ff.).

Ein typisches Beispiel für den Einsatz der erfindungsgemäßen Entschäumer z.B. in Chromelektrolyten zur Hartverchromung von Werkstücken ist ein Gemisch von 125 mg/l des o.g. Fluortensid mit 0,15 mg/l Bis(2-(N-Methylperfluorbutylsulfonamido)ethoxy)phosphorsäure, wobei der CrO₃-Gehalt des Elektrolyten 250 g/l und der Gehalt an Sulfationen 2,5 g/l betragen. Mit Verchromungsbedingungen von 30 A/dm² bei 55°C über 5 Stunden werden ca. 100 m» Chrom mit einer Vickershärte von über 900 abgeschieden.

Die Oberflächenspannung der Elektrolytlösung betrug etwa 24 mN/m. Die bei Verwendung von Fluortensiden auftretende Schaumbildung konnte unterdrückt werden.

## Patentansprüche

1. Schaumhemmende Mittel für saure Elektrolytlösungen zur Herstellung galvanischer Metallschichten mit perfluoralkylierten Tensiden zur Verringerung der Oberflächenspannung, enthaltend neben üblichen Tensiden zusätzlich perfluoralkylhaltige Di- und/oder Triester der Phosphorsäure der allgemeinen Formel 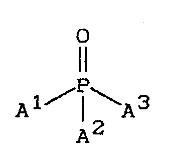 wobei
A¹, A², A³ gleich oder verschieden sein können und einem Rest mit der allgemeinen Formel 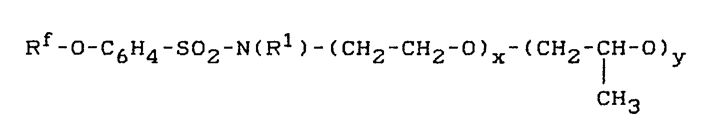
R^{f}-SO₂-N(R¹)-(CH₂)₃O 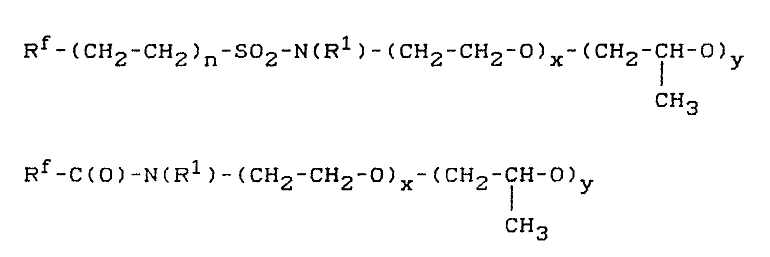 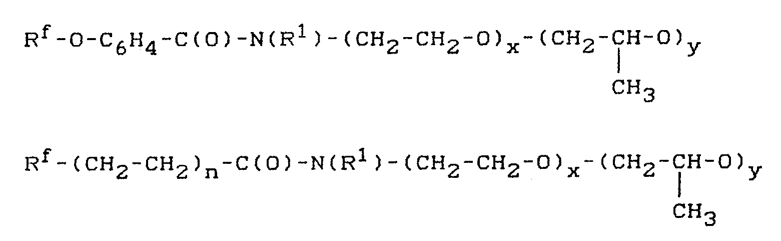
oder dem Hydroxylrest entsprechen, wobei jedoch höchstens ein Rest für den Hydroxylrest stehen kann und
R^{f} ein linearer oder verzweigter aliphatischer Perfluoralkylrest mit 4 bis 12 Kohlenstoffatomen ist,
x einen ganzzahligen Wert von 1 bis 10 annehmen kann,
y einen ganzzahligen Wert von 0 bis 10 annehmen kann und
R¹ den Wasserstoffrest, einen Alkyl- oder Arylrest mit 1 bis 6 Kohlenstoffatomen darstellt und
n ein ganzzahliger Wert von 1 bis 10 ist
oder wobei
A¹, A² gleich oder verschieden sein können und einem Rest mit der allgemeinen Formel 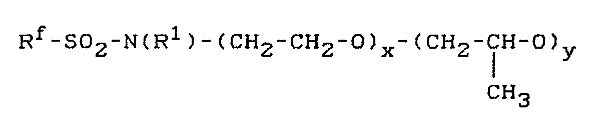
entsprechen und A³ einen Hydroxylrest darstellt und R^{f}, x, y und R¹ dieselbe Bedeutung wie oben haben.

2. Schaumhemmende Mittel gemäß Anspruch 1, dadurch gekennzeichnet, daß die Ester der Phosphorsäure in Konzentrationen von 0,01 bis 10 mg/l, vorzugsweise zwischen 0,1 und 1 mg/l in den tensidhaltigen sauren Elektrolytlösungen vorliegen.

3. Schaumhemmende Mittel gemäß Anspruch 1, dadurch gekennzeichnet, daß die Ester der Phosphorsäure in wäßriger oder organischer Lösung oder Suspension mit oberflächenaktiven Fluortensiden vorliegen.

4. Anwendung schaumhemmender Mittel gemäß einem der Ansprüche 1 bis 3 bei der Herstellung galvanischer Chromschichten, insbesondere von Hart- oder Glanzchromschichten durch elektrolytische Abscheidung von Chrom aus Elektrolytlösungen, die sechswertige Chromverbindungen enthalten und mit Fluortensiden versetzt sind.

## Claims

1. Foam inhibitors for acidic electrolyte solutions for the electrolytic deposition of metal coatings using perfluoroalkylated surfactants to reduce surface tension, containing perfluoroalkyl-containing di- and/or triesters of phosphoric acid corresponding to the following general formula: 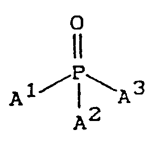 in which
A¹, A² and A³ may be the same or different and represent a group corresponding to the general formula: 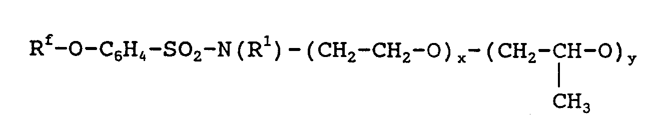
R^{f}-SO₂-N(R¹)-(CH₂)₃O 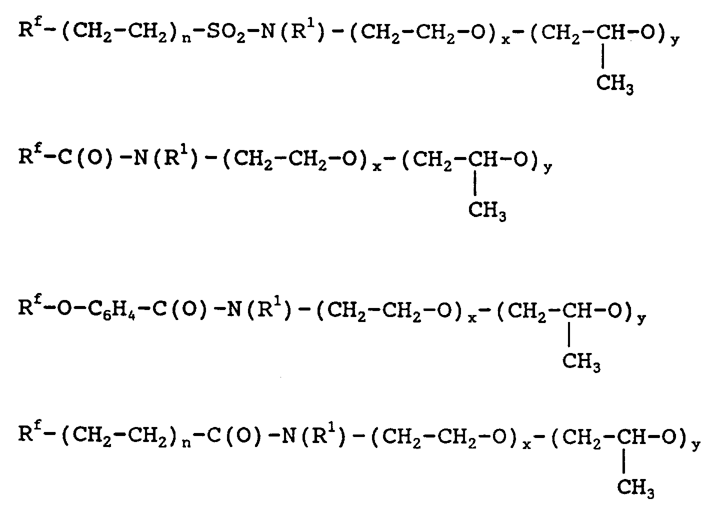
or correspond to the hydroxyl group, although at most one substituent may be the hydroxyl group and
R^{f} is a linear or branched aliphatic perfluoroalkyl radical containing 4 to 12 carbon atoms,
x is an integer of 1 to 10,
y is an integer of 0 to 10,
R¹ is a hydrogen atom or an alkyl or aryl radical containing 1 to 6 carbon atoms and
n is an integer of 1 to 10
or
A¹ and A² may be the same or different and represent a group corresponding to the following general formula: 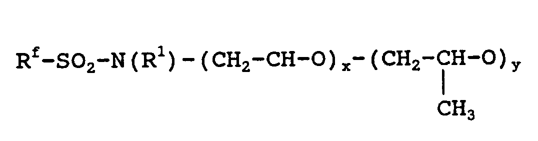 and A³ is a hydroxyl group and R^{f}, x, y and R¹ have the same meaning as above,
in addition to standard surfactants.

2. Foam inhibitors as claimed in claim 1, characterized in that the esters of phosphoric acid are present in the surfactant-containing acidic electrolyte solutions in concentrations of 0.01 to 10 mg/l and preferably in concentrations of 0.1 to 1 mg/l.

3. Foam inhibitors as claimed in claim 1, characterized in that the esters of phosphoric acid are present in aqueous or organic solution or suspension with surface-active fluorine surfactants.

4. The use of the foam inhibitors claimed in any of claims 1 to 3 in the production of chromium layers, more particularly hard or bright chromium layers, by electrolytic deposition of chromium from electrolyte solutions which contain hexavalent chromium compounds and to which fluorine surfactants have been added.

## Revendications

1. Compositions anti-moussantes pour solutions aqueuses d'électrolytes destinées à produire des couches métalliques galvaniques, additionnées d'agents tensio-actifs perfluoralkylés pour réduire la tension superficielle, contenant en outre, à côté d'agents tensio-actifs classiques, des diesters et/ou triesters perfluoralkylés d'acide phosphorique de formule générale 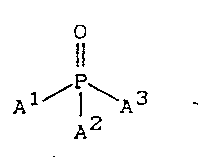 dans laquelle
A¹, A², A³ peuvent être identiques ou différents et correspondent à un reste de formule générale 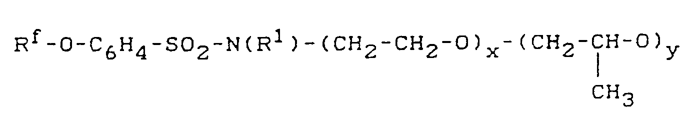
R^{f}-SO₂-N(R¹)-(CH₂)₃O 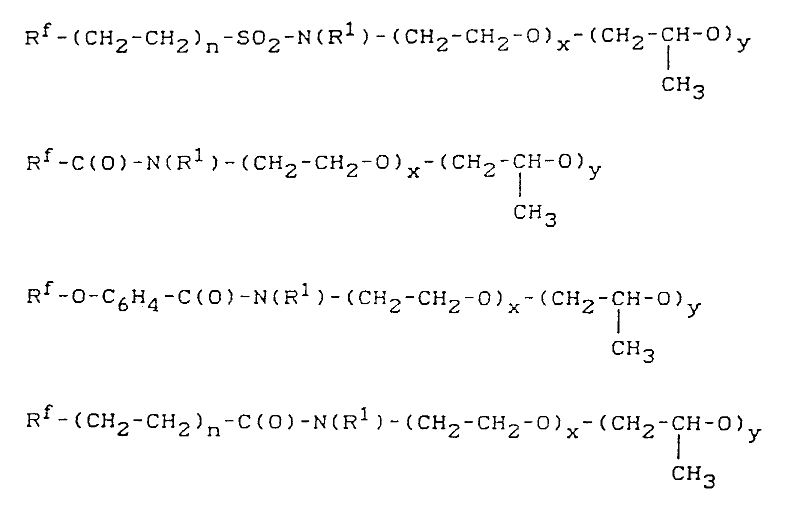
ou au reste hydroxyle, mais au maximum un seul reste pouvant représenter le reste hydroxyle,
et
R^{f} est un reste perfluoralkyle aliphatique linéaire ou ramifié ayant 4 à 12 atomes de carbone,
x est un nombre pouvant prendre une valeur entière de 1 à 10,
y est un nombre pouvant prendre une valeur entière de 0 à 10 et
R¹ est le reste hydrogène, un reste alkyle ou aryle ayant 1 à 6 atomes de carbone et
n est un nombre entier ayant une valeur de 1 à 10
ou bien
A¹, A² peuvent être identiques ou différents et correspondent à un reste de formule générale 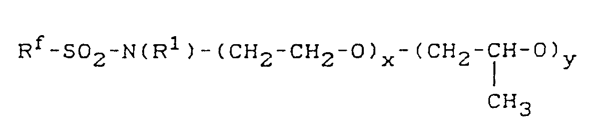
et A³ représente un reste hydroxyle, et R^{f}, x, y et R¹ ont la même définition que ci-dessus.

2. Compositions anti-moussantes suivant la revendication 1, caractérisées en ce que les esters d'acide phosphorique sont présents à des concentrations de 0,01 à 10 mg/l, de préférence comprises entre 0,1 et 1 mg/l dans les solutions acides d'électrolyte contenant un agent tensio-actif.

3. Compositions anti-moussantes suivant la revendication 1, caractérisées en ce que les esters d'acide phosphorique sont présents en solution ou suspension aqueuse ou organique avec des agents tensio-actifs fluorés.

4. Utilisation de compositions anti-moussantes suivant l'une des revendications 1 à 3 dans la production de couches galvaniques de chrome, notamment de couches de chrome dures ou brillantes par déposition électrolytique de chrome à partir de solutions d'électrolytes qui contiennent des composés de chrome hexavalent et qui sont additionnées d'agents tensio-actifs fluorés.
